# EUROPEAN PATENT SPECIFICATION

(11) **EP 2 058 723 B1**
(45) Date of publication and mention of the grant of the patent: **10.10.2018**
(21) Application number: 08008362.9
(22) Date of filing: 02.05.2008
(51) Int. Cl.: G06F 1/18

(54) **SHOCK ABSORBING STRUCTURE OF COMPUTER STORAGE DEVICE**
STOSSDÄMPFUNGSSTRUKTUR EINER COMPUTERSPEICHERVORRICHTUNG
STRUCTURE D'ABSORPTION DES CHOCS POUR DISPOSITIF DE STOCKAGE INFORMATIQUE

(30) Priority: 07.11.2007 TW 96218770 U
(43) Date of publication of application: 13.05.2009
(73) Proprietor: Portwell Inc., Neihu Taipei City 114 (TW)
(72) Inventor: Lin, Yu-Ting, Taipei City 114 (TW)
(74) Representative: Zeitler Volpert Kandlbinder Patent- und Rechtsanwälte Partnerschaft mbB

(56) References cited:
- EP-A- 1 102 278
- US-A1- 2003 198 012
- US-A1- 2005 231 905
- SEVERAL: "Vibration and shock handbook" 2005, CRC PRESS, TAYLOR & FRANCIS GROUP, LCC , BOCA RATON, FLORIDA , XP002525820 ISBN: 0-8493-1580-8 * pages 32-6 - pages 32-8; figure 32.4 * * pages 32-11 - pages 32-13 *

## Description

### BACKGROUND OF THE INVENTION

### Field of the Invention

The present invention relates to a shock absorbing structure of a computer storage device, and more particularly to a shock absorbing structure capable of damping the energy transmitted to the storage device to achieve a better shock absorbing effect.

### Description of the Related Art

As science and technology advance, computers are used extensively with a faster speed and a more diversified manner. In addition to the general applications of computers used at home or in office, computers are also installed in motor vehicles to provide information of the motor vehicle control system and control other automobile equipments such as stereo, CD drive and global positioning system (GPS) to provide additional information and recreation to drivers and passengers, and computer gradually becomes a standard equipment for motor vehicles.

With the computer integrated with various different ways of receiving information, drivers can learn about the driving conditions, and avoid running into a traffic jam or being lost, and drivers can control different situations easily. However, computers are delicate high-tech products containing various components. To maintain the required functions and safety of a computer, the requirements for a structural design of industrial computers used in cars, airplanes, ships or any place with severe vibrations are much stricter than those of home computers.

For a computer, the hard disk drive is a dispensable part for storing and controlling an automobile performance program and integrating various automobile equipments. Since severe vibrations are usually produced in different road conditions when the car is traveling, the hard disk drive may be damaged, the computer operation may be affected, and even the safety may be jeopardized.

To protect the safety of a computer, particularly the hard disk, the computer is usually installed at a position in the car with the least level of vibrations in accordance with the prior art to enhance the elastic strength of a computer structure. However, the major damage of the computer comes from the vibrations of the car body, and such vibrations directly affect the hard disk installed in the computer. Therefore, finding a way of improving the protection of hard disks installed in computers demands immediate attentions and feasible solutions for the structural design of the computer.

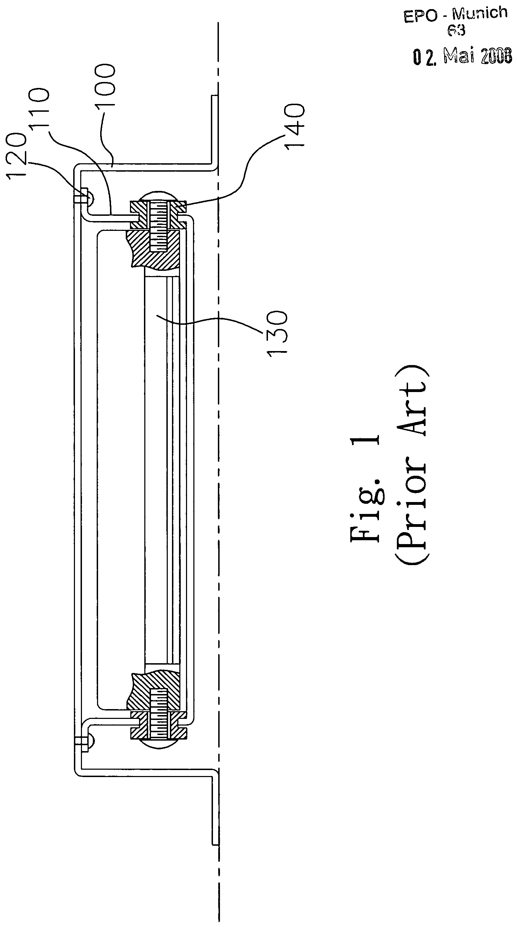

To overcome the foregoing shortcomings, manufacturers introduced a shock absorber as shown in FIG. 1, and the shock absorber includes a frame 100 mounted in a computer casing for hanging a rack 110 in the frame 100, and the rack 110 is secured in the frame 100 by screws 120, and the rack 110 is provided for fixing a hard disk 130, and an elastic pad 140 is installed between the hard disk 130 and the rack 110, and the hard disk 130 is installed on the elastic pad 140. Although vibrations produced when a car is traveling can be absorbed by the elastic pad 140, the elastic pad 140 cannot absorb severe vibrations completely, and the shock absorbing effect will be affected.

EP1102278 discloses a mounting system for a disk drive for absorbing shock andvibration in a machining environment.

### Summary of the Invention

In view of the foregoing shortcomings of the prior art, the inventor of the present invention based on years of experience to conduct extensive researches and experiments, and finally developed a shock absorbing structure of a computer storage device in accordance with the present invention to overcome the shortcomings of the present invention.

Therefore, it is a primary objective of the present invention to overcome the shortcomings of the prior art by providing a shock absorbing structure of a computer storage device, and the shock absorbing structure is mounted into a computer chassis. The structure comprises a base and a frame, wherein the base includes a containing space for precisely containing a storage device (such as a hard disk drive or a CD drive), and the base has a protruding ear extended outwardly and separately from both lateral sides of the base, and upper and lower sides of each protruding ear have corresponding first and second shock absorbing elements made of materials with different elastic strengths respectively. The second shock absorbing element is provided for maintaining an appropriate interval between the base and the computer chassis, wherein a frame uses the first shock absorbing element to hang the base below the frame, such that the different elastic strengths of the first and second shock absorbing elements cause different absorbing and feedback forces of the first and second shock absorbing elements to damp the energy transmitted to the storage device to improve the shock absorbing effect.

Another objective of the present invention is to provide a shock absorbing structure of a computer storage device, wherein a pad member is installed between corresponding lateral sides of the frame and the base for increasing the shock resistance to improve the shock absorbing effect.

A further objective of the present invention is to provide a shock absorbing structure of a computer storage device, wherein an elastic pad is embedded between both lateral sides of the base and fixed onto the storage device, such that if the storage device is installed, the vibration energy can be absorbed by the elastic pad to improve the shock absorbing effect.

### BRIEF DESCRIPTION OF THE DRAWINGS

FIG. 1 is a cross-sectional view of a prior art;
FIG. 2 is an exploded view of a preferred embodiment of the present invention;
FIG. 3 is a cross-sectional view of a preferred embodiment of the present invention;
FIG. 4 is a perspective view of the present invention; and
FIG. 5 is another perspective view of the present invention.

### DETAILED DESCRIPTION OF THE PREFERRED EMBODIMENTS

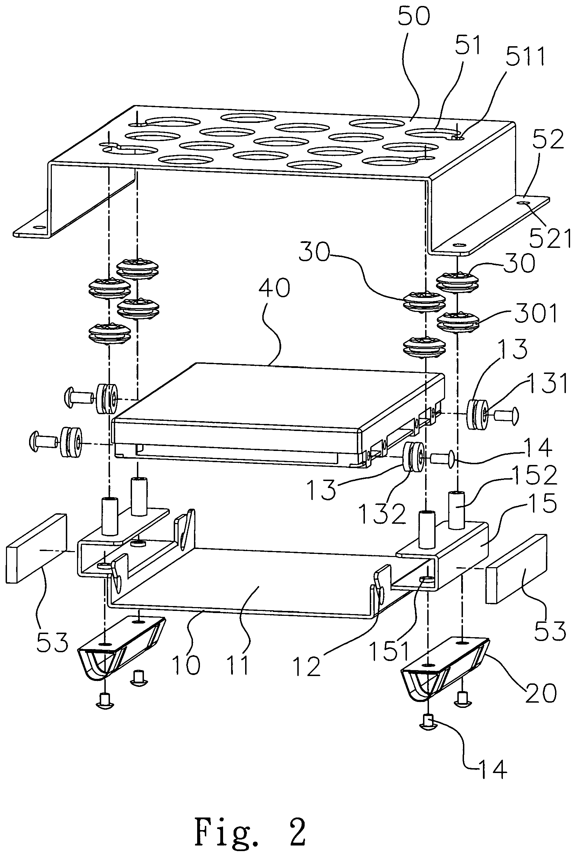

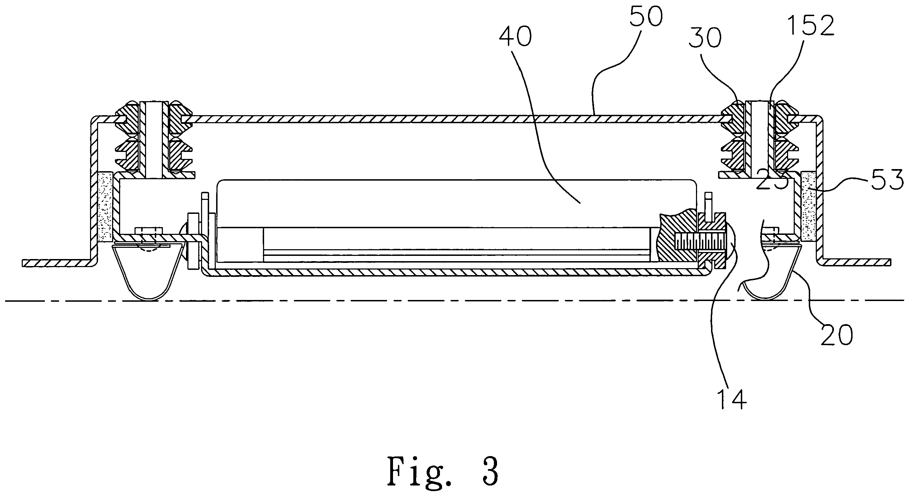

Referring to FIGS. 2 and 3 for a shock absorbing structure of a computer storage device installed in a computer chassis of a car in accordance with the present invention, the structure comprises a base 10 having a containing space 11 for containing a storage device 40 (which is a hard disk in this embodiment), and at least one open embedding hole 12 disposed separately on both lateral sides of containing space 11 for embedding an elastic pad 13 which is a wheel-shaped pad member. The elastic pad 13 has a through hole 131 extended axially along the elastic pad 13, and an embedding groove 132 disposed in the elastic pad 13, such that the embedding groove 132 can be embedded into the embedding hole 12 from an opening of the embedding hole 12 for embedding the elastic pad 13 into the embedding hole 12. A screw rod 14 is passed through the through hole 131 and secured separately onto both lateral sides of the storage device 40 in the containing space 11, so that the storage device 40 can be fixed into the containing space 11. The elastic pad 13 is provided for absorbing energy produced by the vibrations to achieve a better shock absorbing effect. If it is necessary to remove the storage device 40, the elastic pad 13 is pushed away from the embedding hole 12 to separate the storage device 40 from the base 10 in order to facilitate the removal of the storage device 40 for maintenance and repair.

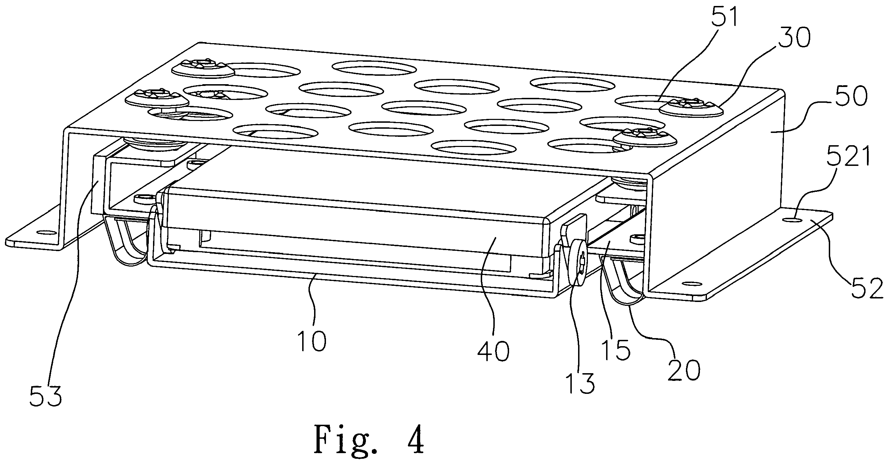

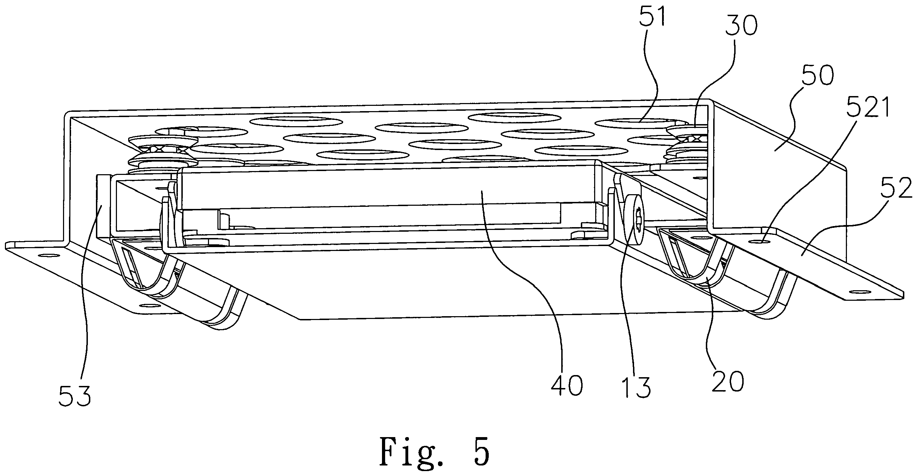

Further, a plurality of protruding ears 15 are substantially C-shape frames in this embodiment and extended separately outward from both lateral sides of the base 10. A side of the protruding ear 15 includes at least one protruding locking hole 151 (wherein two locking holes 151 are adopted in this embodiment), and each protruding ear 15 includes a second shock absorbing element 20 (which is an oval spring plate) disposed below the corresponding locking hole 151, such that a screw rod 14 can be passed through the second shock absorbing element 20 and secured into the locking hole 151 for fixing the second shock absorbing element 20 below the base 10. The second shock absorbing element 20 maintains an appropriate interval between the base 10 and the computer chassis. Another side of the protruding ear 15 has at least one protruding pillar 152 (wherein two protruding pillars 152 are adopted in this embodiment) sheathed with at least one first shock absorbing element 30 corresponding to the second shock absorbing element 20 (and two disc-shaped pad members are adopted in this embodiment), and the first shock absorbing element 30 and the second shock absorbing element 20 come with different elastic strengths. Further, the first shock absorbing element 30 is embedded into a frame 50 which is a U-shaped frame, and the frame 50 has one or more openings 51, each interconnected with the slide slot 511. The diameter of the slide slot 511 is smaller than the diameter of the opening 51, and thus the embedding groove 301 of the first shock absorbing element 30 can be slid from the opening 51 into the slide slot 511 and hanged in the frame 50, and the base 10 can be hanged in the frame 50 as well. An extended edge 52 is extended horizontally and separately along both lateral sides of the frame 50, and each extended edge 52 has a screw hole 521 for passing through a screw rod to fix the frame 50 at an appropriate position in the computer chassis (as shown in FIGS. 4 and 5), and a gap is formed between corresponding lateral sides of the frame 50 and the base 10 for plugging in a pad member 53 which is a sponge in this embodiment for damping the shocks.

If the computer chassis is vibrated when the car is traveling as shown in FIGS. 3 to 5, a portion of vibrations transmitted from the lateral sides of the computer can be absorbed by the deformation of the pad member 53, protruding ear 15 and elastic pad 13. For the vibrations produced at the top and bottom of the computer, the first and second shock absorbing elements 30, 20 come with different elastic strengths for diversifying the energy produced by the vibrations and reducing the energy transmitted to the storage device 40, so as to improve the shock absorbing effect.

In summation of the above description, the present invention herein enhances the performance of the conventional structure. While the invention has been described by means of specific embodiments, numerous modifications and variations could be made thereto by those skilled in the art without departing from the scope of the invention set forth in the claims.

## Claims

1. Shock absorbing structure of a computer storage device (40), mounted in a computer chassis, comprising:
a base (10), disposed in said computer chassis, and having a containing space (11) for containing and fixing said storage device (40);
a frame (50) substantially in the shape of a rack installed on said base (10), said frame (50) fixedly connected to said computer chassis;
at least one first shock absorbing element (30), embedded into said frame (50) and installed between said base (10) and said frame (50) for coupling said base (10) and said frame (50), wherein said first shock absorbing element (30) is a disc-shaped pad member, said frame (50) has one or more openings (51), each interconnected with a slide slot (511), the diameter of said slide slot (511) is smaller than the diameter of said opening (51), said first shock absorbing element (30) is provided with an embedding groove (301) allowing it to be slid from the opening (51) into the slide slot (511) and hanged in the frame (50), and the base (10) thus hanging in the frame (50) as well;
at least one second shock absorbing element (20), fixedly connected to said base (10) and installed between said base (10) and said computer chassis, for maintaining an appropriate interval between said base (10) and said computer chassis, said second shock absorbing element (20) having an elastic strength different from that of said first shock absorbing element (30),
such that when said computer chassis is vibrated, the different elastic strengths of said first and second shock absorbing elements (30, 20) diversify a vibration force to reduce the energy transmitted to said storage device (40) and achieve a shock absorbing effect.

2. Shock absorbing structure of a computer storage device (40) according to claim 1, **characterized in that** said frame (50) is provided for containing the base (10) therein.

3. Shock absorbing structure of a computer storage device (40) according to claim 1 or 2, **characterized in that** said base (10) includes a plurality of embedding holes (12) disposed respectively on both lateral sides of said base (10), and an elastic pad (13) embedded separately into said embedding holes (12) and attached tightly onto a lateral side of said storage device (40) for enhancing a shock absorbing effect, wherein said elastic pad (13) is a wheel-shaped pad member, said elastic pad (13) has a through hole (131) extended axially along said elastic pad (13), and an embedding groove (132) disposed in said elastic pad (13), such that said embedding groove (132) been embedded into said embedding hole (12) from an opening of the embedding hole (12) for embedding said elastic pad (13) into said embedding hole (12), a screw rod (14) is passed through said through hole (131) and secured separately onto both lateral sides of said storage device (40) in said containing space (11), so that said storage device (40) can be fixed into said containing space (11), and when the storage device (40) is to be removed, the elastic pad (13) is pushed away from said embedding hole (12) to separate said storage device (40) from said base (10) in order to facilitate the removal of said storage device (40) for maintenance and repair.

4. Shock absorbing structure of a computer storage device (40) according to one of claims 1 to 3, **characterized in that** said base (10) includes a plurality of protruding ears (15) disposed on both lateral sides of said base (10) for installing said first and second shock absorbing elements (30, 20) at upper and lower surfaces of said protruding ears (15) respectively.

5. Shock absorbing structure of a computer storage device (40) according to claim 4, **characterized by** a pad member (53) installed separately between corresponding lateral sides of said frame (50) and said protruding ears (15) of said base (10).

6. Shock absorbing structure of a computer storage device (40) according to claim 5, **characterized in that** said pad member (53) is a sponge.

7. Shock absorbing structure of a computer storage device (40) according to one of the foregoing claims, **characterized in that** said second shock absorbing element (20) is a spring plate.

## Patentansprüche

1. Stoßdämpfungsstruktur einer Computerspeicher-Vorrichtung (40), die in einem Computer-Gehäuse angeordnet ist, umfassend eine Basis (10), die sich im dem Computer-Gehäuse befindet und einen Aufnahmeraum (11) aufweist, der die Speicher-Vorrichtung (40) enthält und fixiert: einen Rahmen (50), dessen Form im wesentlichen der eines Gestells entspricht, das auf der Basis (10) installiert ist, wobei der Rahmen (50) mit dem Computer-Gehäuse fest verbunden ist; ferner umfassend wenigstens ein erstes StoßdämpfungsElement (30), das in dem Rahmen (50) angeordnet und zwischen der Basis (10) und dem Rahmen (50) installiert ist, und dazu dient, die Basis (10) und den Rahmen (50) zu verbinden, wobei das erste Stoßdämpfungselement (30) ein scheibenförmiger Pufferkörper ist, der Rahmen (50) eine oder mehrere Öffnungen (51) aufweist, die jede mit einem Gleitschlitz (511) in Verbindung steht, der Durchmesser dieses Gleitschlitzes (511) kleiner ist als der Durchmesser der Öffnung (51), das erste Stoßdämpfungselement (30) mit einer Lagerungsnut (301) versehen ist, die von der Öffnung (51) in den Gleitschlitz (511) verschiebbar ist und in dem Rahmen (50) von der Basis (10) hängt und somit auch in dem Rahmen (50) hängt;
des weiteren mit wenigstens einem zweiten Stoßdämpfungselement (20), das mit der Basis (10) fest verbunden ist und zwischen der Basis (10) und dem Computer-Gehäuse installiert ist und dazu dient, zwischen der Basis (10) und dem Computer-Gehäuse einen geeigneten Zwischenraum aufrecht zu erhalten, wobei das zweite Stoßdämpfungselement (20) eine Elastizität aufweist, die sich von derjenigen des ersten Stoßdämpfungselementes (30) unterscheidet, und zwar derart, daß dann, wenn das Computer-Gehäuse schwingt, die unterschiedlichen Elastizitäten der ersten und zweiten Stoßdämpfungselemente (30, 20) eine Vibrationskraft umleiten, um die Energie, die auf die Speicher-Vorrichtung (40) übertragen wird, zu reduzieren und einen Stoßdämpfungseffekt zu erreichen.

2. Stoßdämpfungsstruktur einer Computerspeicher-Vorrichtung (40) nach Anspruch 1, **dadurch gekennzeichnet, daß** der Rahmen (50) so ausgebildet ist, daß er die Basis (10) enthält.

3. Stoßdämpfungsstruktur einer Computerspeicher-Vorrichtung (40) nach Anspruch 1 oder 2, **dadurch gekennzeichnet, daß** die Basis (10) mehrere Einbettungslöcher (12) aufweist, die auf beiden lateralen Seiten der Basis (10) entsprechend angeordnet sind, sowie einen elastischen Puffer (13), der getrennt in den Einbettungslöchern (12) eingebettet ist und fest auf einer lateralen Seite der Speicher-Vorrichtung (40) angebracht ist, um die Stoßdämpfungswirkung zu verstärken, wobei der elastische Puffer (13) ein radförmiger Pufferkörper ist und ein Durchgangsloch (131) aufweist, das sich in axialer Richtung entlang des Puffers (13) erstreckt, und mit einer Einbettungsnut (132), die sich in dem elastischen Puffer (13) befindet, so daß die genannte Einbettungsnut (132) in dem Einbettungsloch (12) von einer Öffnung des Einbettungsloches (12) aus eingebettet wird, um dadurch den elastischen Puffer (13) in dem Einbettungsloch (12) anzuordnen, des weiteren mit einem Schraubbolzen (14), der durch das Durchgangsloch (131) gesteckt ist und separat auf beiden lateralen Seiten der Speicher-Vorrichtung (40) in dem Aufnahmeraum (11) befestigt ist, so daß die Speicher-Vorrichtung (40) in dem Aufnahmeraum (11) fixiert werden kann, und dann, wenn die Speicher-Vorrichtung (40) entfernt wird, der elastische Puffer (13) von dem Einbettungsloch (12) weggestoßen wird, um die Speicher-Vorrichtung (40) von der Basis (10) zu trennen und damit das Entfernen der Speicher-Vorrichtung (40) zu Wartungs- und Reparaturzwecken zu erleichtern.

4. Stoßdämpfungsstruktur einer Computerspeicher-Vorrichtung (40) nach einem der Ansprüche 1 bis 3, **dadurch gekennzeichnet, daß** die Basis (10) mehrere vorspringende Ansätze (15) aufweist, die auf beiden lateralen Seiten der Basis (10) angeordnet sind und dazu dienen, die ersten und zweiten stoßdämpfenden Elemente (30, 20) auf den oberen und unteren Seiten der vorspringenden Ansätze (15) entsprechend zu installieren.

5. Stoßdämpfungsstruktur einer Computerspeicher-Vorrichtung (40) nach Anspruch 4, **gekennzeichnet durch** einen Pufferkörper (53), der zwischen entsprechenden lateralen Seiten des Rahmens (50) und den vorspringenden Ansätzen (15) getrennt installiert ist.

6. Stoßdämpfungsstruktur einer Computerspeicher-Vorrichtung (40) nach Anspruch 5, **dadurch gekennzeichnet, daß** der Pufferkörper (53) ein Schwamm ist.

7. Stoßdämpfungsstruktur einer Computerspeicher-Vorrichtung (40) nach einem der vorhergehenden Ansprüche, **dadurch gekennzeichnet, daß** das zweite Stoßdämpfungselement (20) eine Federplatte ist.

## Revendications

1. Structure d'absorption de choc d'un dispositif de stockage informatique (40) monté dans un châssis d'ordinateur, comprenant :
une base (10), disposée dans ledit châssis d'ordinateur et ayant un espace conteneur (11) pour contenir et fixer ledit dispositif de stockage (40) ;
un cadre (50) sensiblement sous la forme d'une baie installée sur ladite base (10), ledit cadre (50) étant connecté de manière fixe audit châssis d'ordinateur ;
au moins un élément d'absorption de choc (30), noyé dans ledit cadre (50) et installé entre ladite base (10) et ledit cadre (50) pour coupler ladite base (10) et ledit cadre (50), dans lequel ledit premier élément d'absorption de choc (30) est un élément de coussin en forme de disque, ledit cadre (50) ayant une ou plusieurs ouvertures (51), interconnectées chacune avec une fente de coulissement (511), le diamètre de ladite fente de coulissement (511) étant plus petit que le diamètre de ladite ouverture (51), ledit premier élément d'absorption de choc (30) étant doté d'une gorge de réception (301) permettant de le coulisser depuis l'ouverture jusque dans la fente de coulissement (511) et de le suspendre dans le cadre (50), et la base (10) étant ainsi également suspendue dans le cadre (50) ;
au moins un second élément d'absorption de choc (20), connecté de manière fixe à ladite base (10) et installé entre ladite base (10) et ledit châssis d'ordinateur, pour maintenir un intervalle approprié entre ladite base (10) et ledit châssis d'ordinateur, ledit second élément d'absorption de choc (20) ayant une résistance élastique différente de celle dudit premier élément d'absorption de choc (30),
de telle sorte que lorsque ledit châssis d'ordinateur est mis en vibration, les différentes résistances élastiques dudit premier et dudit second élément d'absorption de choc (30, 20) font que les forces de vibration deviennent différentes afin de réduire l'énergie transmise audit dispositif de stockage (40) et assurent un effet d'absorption de choc.

2. Structure d'absorption de choc d'un dispositif de stockage informatique (40) selon la revendication 1, **caractérisée en ce que** ledit cadre (50) est prévu pour contenir la base (10) à l'intérieur.

3. Structure d'absorption de choc d'un dispositif de stockage informatique (40) selon la revendication 1 ou 2, **caractérisée en ce que** ladite base (10) inclut une pluralité de trous de réception (12) disposés respectivement sur les deux côtés latéraux de ladite base (10), et un coussinet élastique (13) reçu séparément dans lesdits trous de réception (12) et attaché de façon serrée sur un côté latéral dudit dispositif de stockage (40) pour améliorer un effet d'absorption de choc, dans lequel ledit coussinet élastique (13) est un élément de coussinet en forme de roue, ledit coussinet élastique (13) ayant un trou traversant (131) s'étendant axialement le long dudit coussinet élastique (13), et une gorge de réception (132) disposée dans ledit coussinet élastique (13), de telle façon que ladite gorge de réception (132) étant logée dans ledit trou de réception (12) depuis une ouverture du trou de réception (12) pour recevoir ledit coussinet élastique (13) dans ledit trou de réception (12), une tige filetée (14) est passée à travers ledit trou traversant (131) et bloquée séparément sur les deux côtés latéraux dudit dispositif de stockage (40) dans ledit espace conteneur (11), de sorte que ledit dispositif de stockage (40) peut être fixé dans ledit espace conteneur (11) et, quand le dispositif de stockage (40) doit être enlevé, le coussinet élastique (13) est poussé en éloignement dudit trou de réception (12) pour séparer ledit dispositif de stockage (40) depuis ladite base (10) afin de faciliter l'enlèvement dudit dispositif de stockage (40) pour la maintenance et la réparation.

4. Structure d'absorption de choc d'un dispositif de stockage informatique (40) selon l'une des revendications 1 à 3, **caractérisée en ce que** ladite base (10) inclut une pluralité de pattes en projection (15) disposées sur les deux côtés latéraux de ladite base (10) pour installer ledit premier et ledit second élément d'absorption de choc (30, 20) sur une surface supérieure et une surface inférieure desdites pattes en projection (15) respectivement.

5. Structure d'absorption de choc d'un dispositif de stockage informatique (40) selon la revendication 4, **caractérisée par** un élément en coussinet (53) installé séparément entre des côtés latéraux correspondants dudit cadre (50) et lesdites pattes en projection (15) de ladite base (10).

6. Structure d'absorption de choc d'un dispositif de stockage informatique (40) selon la revendication 5, **caractérisée en ce que** ledit élément en coussinet (53) est une éponge.

7. Structure d'absorption de choc d'un dispositif de stockage informatique (40) selon l'une des revendications précédentes, **caractérisée en ce que** ledit second élément d'absorption de choc (20) est une plaque à ressort.
